(19) Europäisches Patentamt
European Patent Office
Office européen des brevets

(11) **EP 3 842 874 B1**

(12) **FASCICULE DE BREVET EUROPEEN**

(45) Date de publication et mention
de la délivrance du brevet:
**20.09.2023 Bulletin 2023/38**

(51) Classification Internationale des Brevets (IPC):
**G04B 19/26** (2006.01)    **G04B 45/00** (2006.01)
G02B 26/02 (2006.01)    G02B 27/06 (2006.01)

(21) Numéro de dépôt: **19219492.6**

(22) Date de dépôt: **23.12.2019**

(52) Classification Coopérative des Brevets (CPC):
**G04B 45/0007; G04B 19/268; G04B 45/0038;**
G02B 26/023; G02B 27/06

(54) **DISPOSITIF OPTIQUE PERMETTANT DE CREER DES EFFETS OPTIQUES ESTHETIQUES ET TECHNIQUES**

OPTISCHE VORRICHTUNG, MIT DER SICH ÄSTHETISCHE UND TECHNISCHE OPTISCHE EFFEKTE ERZEUGEN LASSEN

OPTICAL DEVICE FOR CREATING AESTHETIC AND TECHNICAL OPTICAL EFFECTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**30.06.2021 Bulletin 2021/26**

(73) Titulaire: **Blancpain SA**
**1348 Le Brassus (CH)**

(72) Inventeurs:
• **TORTORA, M. Pierpasquale**
**2000 Neuchâtel (CH)**
• **BLATTER, M. Cédric**
**1291 Commugny (CH)**
• **DEBAUD, Nicolas**
**1807 Blonay (CH)**
• **MONFERRER M. Bernat**
**1162 St-Prex (CH)**

(74) Mandataire: **ICB SA**
**Faubourg de l'Hôpital, 3**
**2001 Neuchâtel (CH)**

(56) Documents cités:
**WO-A1-2014/152925     FR-A1- 3 064 376**
**US-A1- 2012 287 508**

• **GLASER G: "ASTRONOMISCHE INDIKATIONEN BEI UHREN", JAHRBUCH DER DEUTSCHEN GESELLSCHAFT FUR CHRONOMETRIE, DEUTSCHEN GESELLSCHAFT FUR CHRONOMETRIE E.V. STUTTGART, DE, vol. 40, 1 janvier 1989 (1989-01-01), pages 139-161, XP000102620, ISSN: 0373-7616**

**Description**

Domaine technique de l'invention

La présente invention concerne un dispositif optique permettant de créer de nouveaux effets visuels et qui convient aussi bien pour des applications esthétiques que techniques.

Arrière-plan technologique de l'invention

Imaginé par le physicien écossais Brewster au début du XIXème siècle, le kaléidoscope est un instrument optique réfléchissant à l'infini et en couleurs la lumière extérieure qui se propage à l'intérieur de cet instrument optique par réflexion sur des miroirs. Le nom de cet instrument optique a été construit à l'aide des mots grecs *kalos* qui signifie « beau », *eidos* qui désigne une « image » et *skopein* qui veut dire « regarder ». Se présentant sous la forme d'un tube à une première extrémité duquel pénètre la lumière et à une seconde extrémité duquel l'observateur regarde, le kaléidoscope renferme un certain nombre de fragments de verre colorés qui, lorsqu'on les agite, se réorganisent selon un nombre quasiment illimité de combinaisons et produisent de belles images changeantes. Comme on le comprendra à la lecture de ce qui suit, un kaléidoscope est un exemple d'un dispositif auquel la présente invention peut s'appliquer.

Un autre exemple d'un dispositif auquel la présente invention peut s'appliquer est donné par les mécanismes d'affichage de phases de lune qui équipent de longue date des pièces d'horlogerie, notamment des montres-bracelets. Ces mécanismes d'affichage de phases de lune ont pour but d'indiquer aux propriétaires de montres à quel moment du cycle lunaire ils se trouvent. Ces mécanismes d'affichage de phases de lune sont néanmoins plus décoratifs qu'ils ne fournissent une indication précise permettant au propriétaire de la montre de déterminer facilement dans quel quartier de lune il se trouve. Les mécanismes d'affichage de phases de lune les plus simples comprennent un indicateur à aiguille qui pointe sur les différentes représentations des phases de la Lune (premier quartier, pleine lune, dernier quartier, nouvelle lune). D'autres mécanismes d'affichage de phases de lune connus comprennent un disque qui porte deux représentations de la Lune, une partie de ce disque étant visible à travers une ouverture de forme adaptée ménagée dans le cadran de la montre et révélant successivement une lune croissante, une pleine lune, une lune décroissante et une nouvelle lune. Une telle présentation des différentes phases de la Lune est très avantageuse d'un point de vue esthétique ; néanmoins, la manière dont la Lune est représentée ne présente qu'un rapport éloigné avec la façon dont l'astre lunaire apparaît dans le ciel. Un autre mécanisme d'affichage de phases de lune encore comprend une sphère bicolore qui fait un tour complet sur elle-même à chaque cycle lunaire. Un tel mécanisme d'affichage de phases de lune permet de représenter le visage de la Lune de manière réaliste. Cependant, du fait qu'un tel mécanisme d'affichage de phases de lune utilise une sphère pour représenter les différents quartiers de la Lune, il est épais et prend une place importante, de sorte qu'il est difficile à intégrer dans un mouvement d'horlogerie en particulier d'une montre-bracelet.

Un dispositif conventionnel de l'état de l'art est divulgué dans le document FR 3 064 376.

Résumé de l'invention

La présente invention a pour but de remédier aux problèmes mentionnés ci-dessus ainsi qu'à d'autres encore en procurant un dispositif optique permettant de créer des effets optiques esthétiques et techniques.

A cet effet, la présente invention concerne un dispositif optique tel que défini dans la revendication 1.

Selon des formes spéciales d'exécution de l'invention :

- l'indice de réfraction optique du matériau dans lequel est réalisée la lentille plan-concave est compris entre 1.60 et 1.85 et, de préférence, égal ou sensiblement égal à 1.78 ;
- la lentille plan-concave est réalisée en verre ou en polymère ;
- la surface concave de la lentille présente un profil courbe et, de préférence mais non impérativement, asphérique ;
- l'obturateur présente un profil de préférence mais non impérativement, hyperbolique ;
- une représentation de la Lune est reportée sur l'une des faces supérieure ou inférieure du support transparent, des moyens d'entraînement, mus par un mouvement d'horlogerie, entraînant l'obturateur, l'obturateur étant déplacé d'une position initiale à une position finale pendant une durée d'un cycle lunaire, de manière à révéler jour après jour à un observateur l'aspect de la Lune qui passe de la nouvelle lune au premier quartier de lune, puis du premier quartier de lune à la pleine lune, puis au dernier quartier de lune et enfin à la nouvelle lune, l'obturateur étant rappelé par les moyens d'entraînement de sa position finale à sa position initiale à la fin du cycle lunaire ;
- les moyens d'entraînement comprennent une crémaillère rectiligne avec laquelle l'obturateur est couplé de manière fixe en translation ;
- les moyens d'entraînement comprennent une roue inférieure et une roue supérieure sur un axe de rotation de laquelle est montée libre en rotation la roue inférieure qui engrène avec la crémaillère rectiligne ;

- le mouvement d'horlogerie comprend un mobile de minuterie qui entraîne cinématiquement une came qui effectue un tour complet sur elle-même en un nombre entier de fois un cycle lunaire, cette came présentant un profil suivi en permanence par un premier râteau, ce premier râteau étant doté d'un secteur denté par lequel il engrène avec les moyens d'entraînement du mécanisme d'affichage des phases de lune ;

- le premier râteau est muni d'un bec palpeur par lequel il suit en permanence le profil de la came, ce profil étant conformé en colimaçon et étant doté d'au moins un décrochement sensiblement rectiligne de façon que, peu de temps avant le début d'un nouveau cycle lunaire, le bec palpeur se trouve au sommet du profil de la came, puis tombe le long du décrochement, le premier râteau entraînant au cours de ce mouvement par son secteur denté un pignon qui est relié cinématiquement aux moyens d'entraînement du mécanisme d'affichage des phases de lune ;

- un dispositif de rattrapage de jeux se composant de la roue supérieure en prise, d'une part avec la crémaillère rectiligne, et d'autre part avec une roue intermédiaire d'un mobile intermédiaire qui comprend également un pignon intermédiaire, ce pignon intermédiaire engrenant avec un secteur denté d'un second râteau qui est contraint élastiquement par la force de rappel d'un quatrième ressort.

Grâce à ces caractéristiques, la présente invention procure un dispositif optique qui, à travers la lentille plan-concave, permet de projeter l'image d'un bord de l'obturateur sur un objet disposé au-dessus de la surface plane de la lentille plan-concave.

Le dispositif selon l'invention peut trouver un intérêt dans son utilisation combinée avec un kaléidoscope. En effet, l'image du bord de l'obturateur, optimisée lors de son passage à travers la lentille plan-concave, vient se superposer aux images des fragments de verre colorés, ce qui permet de faire varier les contours de ces images et de multiplier davantage encore les combinaisons de formes de ces images.

La présente invention présente également un grand intérêt dans son application à un mécanisme d'affichage de phases de lune. A cet effet, selon un mode particulier d'exécution de l'invention, une représentation de la Lune est reportée sur la surface plane du support transparent, l'obturateur étant déplacé d'une position initiale à une position finale pendant une durée d'une lunaison, de manière à révéler jour après jour à un observateur l'aspect de la Lune qui passe continûment du premier quartier de lune à la pleine lune, puis au dernier quartier de lune et enfin à la nouvelle lune, l'obturateur étant rappelé par les moyens d'entraînement de sa position finale à sa position initiale à la fin de la lunaison. Les différents aspects de la Lune sont ainsi représentés de manière originale et facilement intelligible par l'utilisateur. Notamment, la représentation de la Lune qui est fournie par le dispositif optique selon l'invention est très proche de l'aspect réel de la Lune dans le ciel, de sorte qu'il est beaucoup plus simple pour l'utilisateur de déterminer à quelle période du cycle lunaire la Lune se trouve. Le dispositif optique selon l'invention est également moins épais que ceux utilisant une sphère tournant sur elle-même, et donc plus facile à intégrer dans un mouvement d'horlogerie en particulier d'une montre-bracelet. De plus, quel que soit le quartier dans lequel se trouve la Lune, sa représentation est toujours visible par le propriétaire de la montre. On notera également que le dispositif optique selon l'invention permet d'obtenir une représentation des différentes phases de la Lune réaliste, formée par deux surfaces de couleurs différentes et séparées par un terminateur, c'est-à-dire la courbe qui sépare la partie éclairée de la partie sombre de la Lune, dont le profil est très réaliste et très fidèle à ce que l'utilisateur peut voir lorsqu'il observe la Lune dans le ciel. Ceci est notamment le cas lors du premier et du dernier quartier de lune, moment où les distorsions optiques sont quasi nulles et où le terminateur apparaît ainsi parfaitement rectiligne.

Grâce à l'utilisation combinée d'une lentille plan-concave de préférence asphérique et d'un obturateur à profil courbe, préférentiellement mais non limitativement de type hyperbolique, l'observateur voit un terminateur, c'est-à-dire la courbe qui sépare la partie éclairée de la partie sombre de la Lune, dont le profil est très réaliste et très fidèle à ce que l'utilisateur peut voir lorsqu'il observe la Lune dans le ciel. En outre, le dispositif optique est compact et peut ainsi être logé dans un volume plus restreint tel que celui d'une boîte d'une pièce d'horlogerie du type montre-bracelet. A titre d'exemple, on considère que pour une représentation de la Lune de même diamètre, le dispositif optique selon l'invention est deux fois moins épais qu'un mécanisme d'affichage de phases de lune utilisant une sphère. De même, on comprend que, comme la surface qui reçoit la représentation de la Lune est plane, le dispositif optique selon l'invention n'entrave pas le mouvement de déplacement des aiguilles à la surface du cadran.

Brève description des figures

D'autres caractéristiques et avantages de la présente invention ressortiront plus clairement de la description détaillée qui suit d'un exemple de réalisation d'un dispositif optique selon l'invention, cet exemple étant donné à titre purement illustratif et non limitatif seulement en liaison avec le dessin annexé sur lequel :

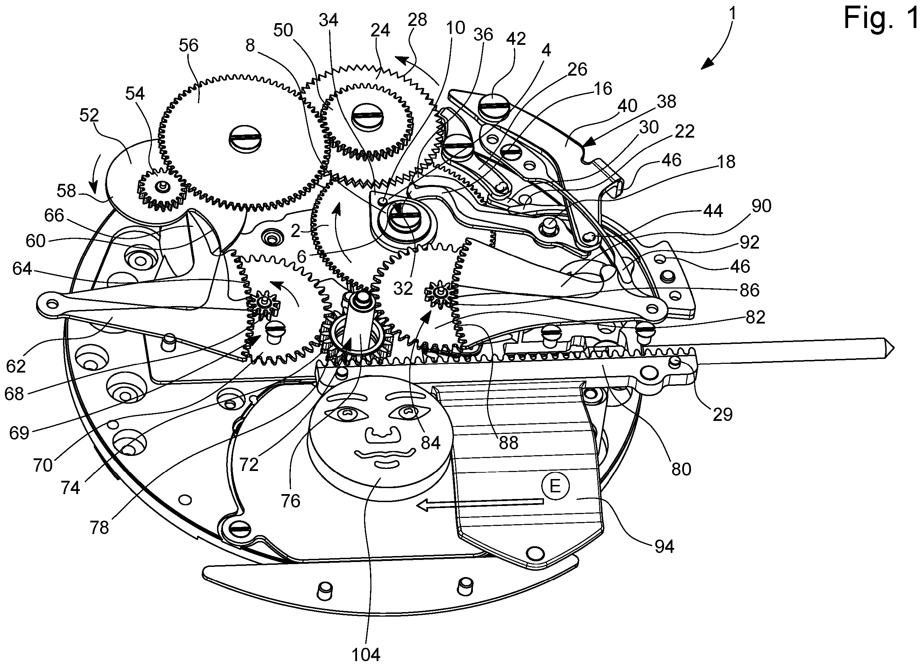

- la figure 1 est une vue en plan du mécanisme d'affichage de phases de lune qui peut être combiné au dispositif optique selon l'invention ;

- la figure 2 est une vue de détail à plus grande échelle du trou oblong dans lequel la goupille portée par le doigt fait saillie ;

- la figure 3A est une vue de détail à plus grande échelle de la première bascule dans sa position intermédiaire A

- la figure 3B est une vue de détail à plus grande échelle de la première bascule dans sa position extrême B dans laquelle elle est en appui contre le sommet du profil du doigt ;

- la figure 4A est une vue de détail à plus grande échelle du premier râteau dans sa position C dans laquelle son bec palpeur se trouve au sommet du profil de la came ;

- la figure 4B est une vue de détail à plus grande échelle du premier râteau dans sa position D dans laquelle son bec palpeur tombe le long du décrochement de la came ;

- la figure 5 est une vue de dessus du support transparent et de la tôle à partir desquels la lentille plan-concave asphérique et l'obturateur sont obtenus ;

- la figure 6 est une vue en élévation et en coupe de l'ensemble optique formé par la lentille plan-concave asphérique, l'obturateur et le substrat ;

- la figure 7 est une vue schématique de dessus qui illustre l'aspect de la représentation de la Lune tel qu'il peut être perçu par l'observateur lorsque l'obturateur commence à pénétrer dans l'espace qui sépare la lentille plan-concave asphérique du substrat ;

- la figure 8A est une vue schématique du mécanisme d'affichage des phases de lune lorsqu'il se trouve dans sa position extrême E au début d'un cycle lunaire ;

- la figure 8B est une vue analogue à celle de la figure 8A qui illustre le mécanisme d'affichage des phases de lune lorsqu'il se trouve dans sa position extrême F à la fin du cycle lunaire, et

- les figures 9A à 9L illustrent l'aspect du terminateur selon plusieurs positions de l'obturateur à profil courbe, de préférence hyperbolique.

Description détaillée d'un mode de réalisation de l'invention

La présente invention procède de l'idée générale inventive qui consiste à procurer un dispositif optique qui permet de projeter une image d'un bord d'un obturateur sur l'image d'un objet disposé au-dessus de ce dispositif optique. Pour atteindre ce but, le dispositif optique selon l'invention comprend essentiellement une lentille optique de forme plan-concave délimitée d'un premier côté par une surface plane, et délimitée d'un second côté opposé au premier par une surface concave. Le dispositif optique comprend également un obturateur disposé sous la lentille plan-concave, du côté de la surface concave, ainsi qu'un substrat disposé à la suite de l'obturateur. De préférence, mais non obligatoirement, l'obturateur est agencé pour pouvoir se déplacer dans l'espace qui sépare la lentille plan-concave du substrat depuis une position proximale vers une position distale, puis revenir vers sa position proximale. L'intérêt du dispositif optique selon l'invention est de créer des effets optiques esthétiques ou techniques nouveaux en permettant de superposer l'image du bord de l'obturateur formée à travers la lentille plan-concave avec l'image d'un objet disposé au-dessus de cette lentille plan-concave, du côté de la surface plane de cette dernière.

Le dispositif optique selon l'invention présente un intérêt tout particulier dans son application à un mécanisme d'affichage de phases de lune consistant à reporter une représentation de la Lune sur l'une ou l'autre des deux faces supérieure et inférieure du support transparent qui est disposé au-dessus et à distance du substrat, avec interposition de l'obturateur entre le support transparent et le substrat. Le visage de la Lune peut être représenté dans une couleur semblable à celle du substrat, tandis que l'obturateur et le substrat présentent des contrastes inversés : si le substrat est clair, alors l'obturateur sera sombre et, inversement, si le substrat est sombre, l'obturateur sera clair. En supposant, à titre d'exemple illustratif seulement, que la représentation de la Lune et le substrat sont sombres et que l'obturateur est clair, on comprend que lorsque l'obturateur ne se trouve pas dans l'espace situé entre le support transparent et le substrat sombre, la représentation de la Lune qui se trouve au-dessus du substrat sombre n'est pas perceptible par l'observateur. Puis, au fur et à mesure que l'obturateur clair pénètre dans l'espace qui sépare le support transparent du substrat sombre, la représentation de la Lune devient progressivement perceptible par l'utilisateur. La présente invention procure ainsi un dispositif optique compact qui permet d'afficher les phases de lune de manière originale et bien plus réaliste que ne le permettent la plupart des dispositifs d'affichage de phases de lune de l'art antérieur. Par conséquent, l'observateur a beaucoup plus de facilité pour comprendre à quelle période du cycle lunaire il se trouve. En outre, le réalisme est encore accru si, conformément à une forme spéciale d'exécution de l'invention, on donne au support transparent un profil plan-concave de préférence mais non impérativement asphérique et que l'on combine un tel support transparent avec un obturateur courbe, de profil préférentiellement hyperbolique. Une telle combinaison permet en effet d'obtenir un terminateur dont le profil est très fidèle à celui que l'on observe dans la réalité au fur et à mesure que la Lune croît, devient pleine, puis décroît et que le cycle lunaire reprend.

Logé par exemple dans une pièce d'horlogerie telle qu'une montre-bracelet, le mécanisme d'affichage des phases de lune 1 est animé par un mouvement d'horlogerie, c'est-à-dire un mécanisme dont le fonctionnement dépend de la division du temps. Plus précisément, le mouvement d'horlogerie comprend un mobile de minuterie dont un pignon (non visible sur les figures) entraîne une roue 24 heures 2 qui, comme son nom l'indique, est agencée de façon à effectuer un tour complet par jour.

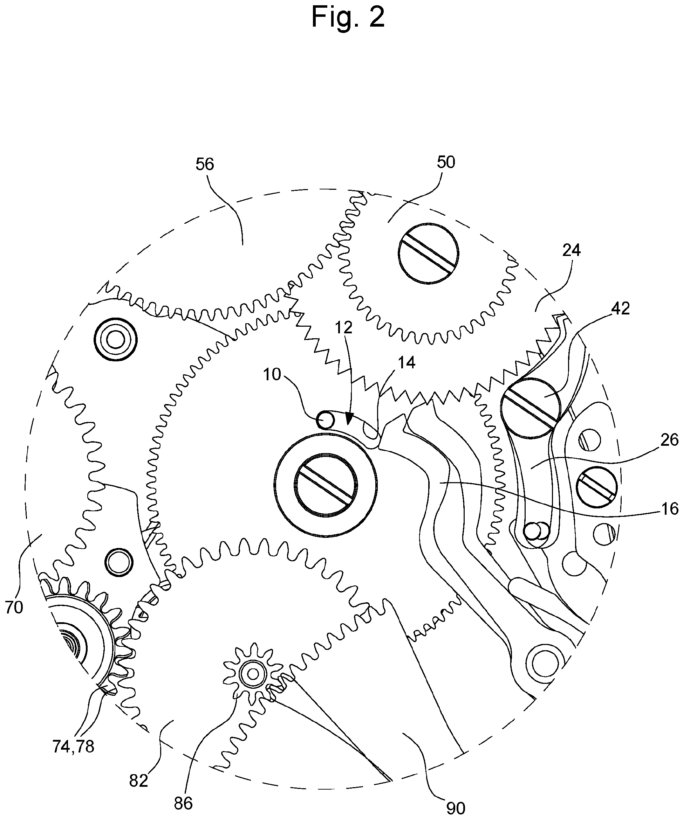

La roue 24 heures 2 porte un doigt 4 sur un axe 6 de laquelle ce doigt 4 est monté libre en rotation. Pour pouvoir pivoter relativement à la roue 24 heures 2, le doigt 4 est monté sur l'axe 6 avec un léger jeu axial grâce à une bague 8 engagée sur cet axe 6. Par ailleurs, le doigt 4 est muni d'une goupille 10 qui fait saillie dans un trou oblong 12 ménagé dans l'épaisseur de la roue 24 heures 2 et qui limite la liberté de pivotement du doigt 4 par rapport à la roue 24 heures 2 (voir figure 2). On comprend donc que lorsque la goupille 10 vient buter contre une paroi intérieure 14 du trou oblong 12, elle est entraînée en rotation par la roue 24 heures 2 et entraîne à son tour le doigt 4 qui, lui aussi, effectue un tour complet en 24 heures.

Le mécanisme d'affichage des phases de lune 1 comprend également une première bascule 16 qui est montée pivotante autour d'un axe de pivotement 18 et qui est appliquée élastiquement contre une première partie 20a d'un profil 20 du doigt 4 par un ressort supérieur 22. On note également sur le dessin la présence d'une étoile 24 dont la position est indexée par un sautoir 26 qui est maintenu élastiquement contre une denture 28 de cette étoile 24 par un ressort inférieur 30.

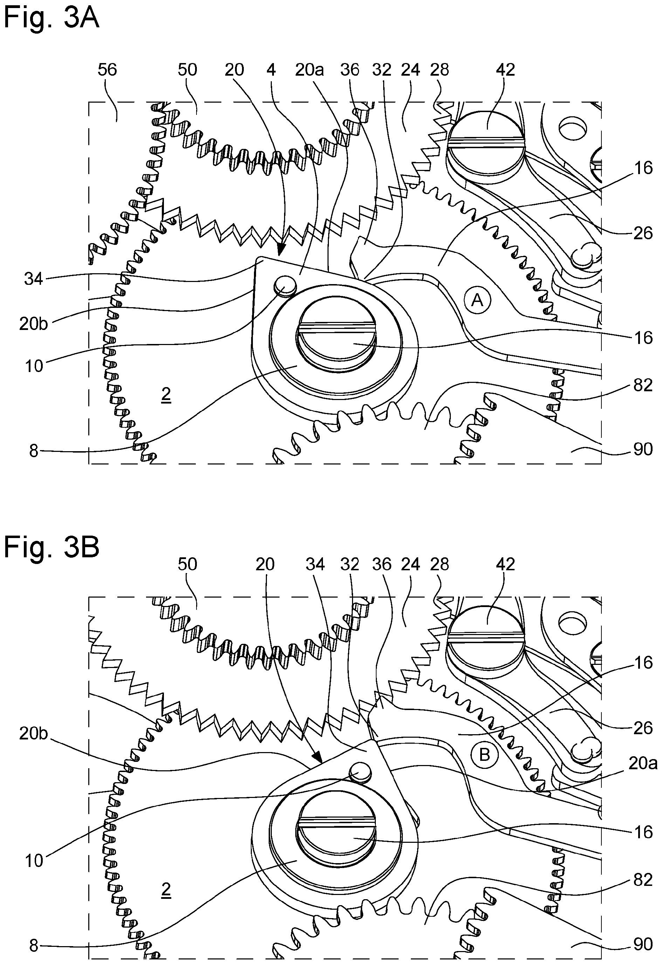

La roue 24 heures 2 tourne dans le sens des aiguilles d'une montre en entraînant avec elle le doigt 4. La première bascule 16 glisse ainsi le long de la première partie 20a du profil 20 du doigt 4 et, après être passée par une position intermédiaire A (figure 3A), se retrouve dans une position extrême B (figure 3B) dans laquelle elle est en appui par un pied 32 contre un sommet 34 du profil 20 du doigt 4. Par ailleurs, la première bascule 16 vient en prise par un bec 36 avec la denture 28 de l'étoile 24. Lorsque, par exemple aux environs de minuit, le doigt 4 avance encore, la première bascule 16 dépasse la position extrême B dans laquelle elle est en appui contre le sommet 34 du profil 20 du doigt 4, et entraîne l'étoile 24 d'un pas dans le sens contraire des aiguilles d'une montre. Ce mouvement est permis par le fait qu'au moment où la première bascule 16 dépasse le sommet 34 du profil 20 du doigt 4, il se produit sur le doigt 4 un effet de levier qui provoque le pivotement de ce doigt 4 et le déplacement concomitant de la goupille 10 qui, en butée contre une extrémité du trou oblong 12 ménagé dans l'épaisseur de la roue 24 heures 2, va se déplacer pour venir en butée contre l'extrémité opposée de ce trou oblong 12. Ensuite, la première bascule 16 recommence à glisser le long d'une seconde partie 20b du profil 20 du doigt 4 qui se trouve après le sommet 34 de ce profil 20. On notera qu'au moment même où la première bascule 16 provoque l'avance d'un pas de l'étoile 24, le sautoir 26 passe, à l'encontre de la force de rappel du ressort inférieur 30, d'un creux entre deux dents consécutives de la denture 28 de l'étoile 24 au creux immédiatement suivant de cette denture 28. En retombant dans le creux suivant, le sautoir 26 permet à l'étoile 24 d'achever son avance d'un pas et assure à nouveau le positionnement précis de cette étoile 24.

Selon un mode préféré mais non limitatif d'exécution du mécanisme d'affichage des phases de lune, celui-ci comprend aussi un dispositif manuel de correction de l'affichage des phases de lune. Désigné dans son ensemble par la référence numérique générale 38, ce dispositif manuel de correction comprend une seconde bascule 40 pivotée autour d'un axe 42 et qui comprend un moyen d'actionnement 44 tel qu'une goupille à une extrémité opposée à l'axe de pivotement 42. Cette seconde bascule 40 comprend par exemple une zone pliée 46 contre laquelle vient appuyer un correcteur (non visible au dessin) lorsque celui-ci est actionné à l'encontre de la force de rappel élastique d'un ressort par le propriétaire de la montre-bracelet depuis l'extérieur du volume de la boîte de montre. Sous l'effet de l'actionnement du correcteur, la seconde bascule 40 pivote autour de son axe 42 et commande à son tour le pivotement de la première bascule 16 de façon à provoquer l'avance d'un pas de l'étoile 24. Cette avance de l'étoile 24 s'opère dans les mêmes conditions que celles décrites ci-dessus lorsque la première bascule dépasse le sommet 34 du profil 20 du doigt 4.

Selon un mode préféré donné à titre purement illustratif et non limitatif seulement, un tour complet de l'étoile 24 correspond à deux cycles lunaires successifs, un cycle lunaire correspondant au temps qui s'écoule entre deux nouvelles Lunes successives et qui est encore appelé mois lunaire. A cet effet, le mécanisme d'affichage des phases de lune est complété par un premier pignon 50 monté de manière coaxiale et fixe en rotation sur l'étoile 24, par un renvoi 56 ainsi que par une came 52 sur l'axe de rotation de laquelle est monté fixe un second pignon 54. Le premier pignon 50 entraîne le second pignon 54 par l'intermédiaire du renvoi 56, les rapports de dentures de cette chaîne cinématique étant calculés de façon que la came 52 effectue un tour complet par cycle lunaire.

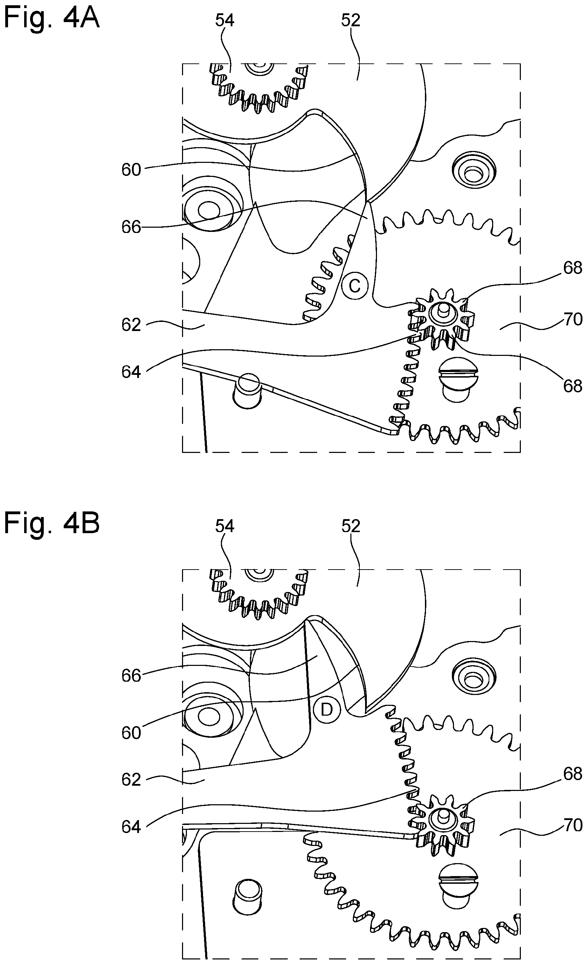

La came 52 présente un profil 58 en colimaçon doté d'un décrochement 60 sensiblement rectiligne. Un premier râteau 62 doté d'un secteur denté 64 est également muni d'un bec palpeur 66 par lequel il suit en permanence le profil 58 de la came 52. Peu de temps avant le début d'un nouveau cycle lunaire, par exemple aux alentours de minuit, le bec palpeur 66 du premier râteau 62 se trouve au sommet du profil 58 de la came 52 (position C - figure 4A), puis tombe le long du décrochement 60 de la came 52 (position D - figure 4B). Au cours de ce mouvement, le premier râteau 62 qui, par son secteur denté 64, est en prise permanente avec un troisième pignon 68, fait tourner ce troisième pignon 68 dans le sens horaire d'une quantité correspondant à la chute du bec palpeur 66 le long du décrochement 60.

En tournant, le troisième pignon 68 fait tourner une roue 70 avec laquelle il forme un mobile 69. Autrement dit, le troisième pignon 68 est monté sur la roue 70 de manière coaxiale et fixe en rotation par rapport à cette roue 70. Par suite, la roue 70 transmet son mouvement de rotation à des moyens d'entraînement 72 du mécanisme d'affichage des phases de lune 1 qui comprennent une roue inférieure 74 et une roue supérieure 78 montées libres en rotation sur un axe de rotation 76. La roue inférieure 74 engrène avec une crémaillère rectiligne 80 qui à son tour engrène avec la roue supérieure 78.

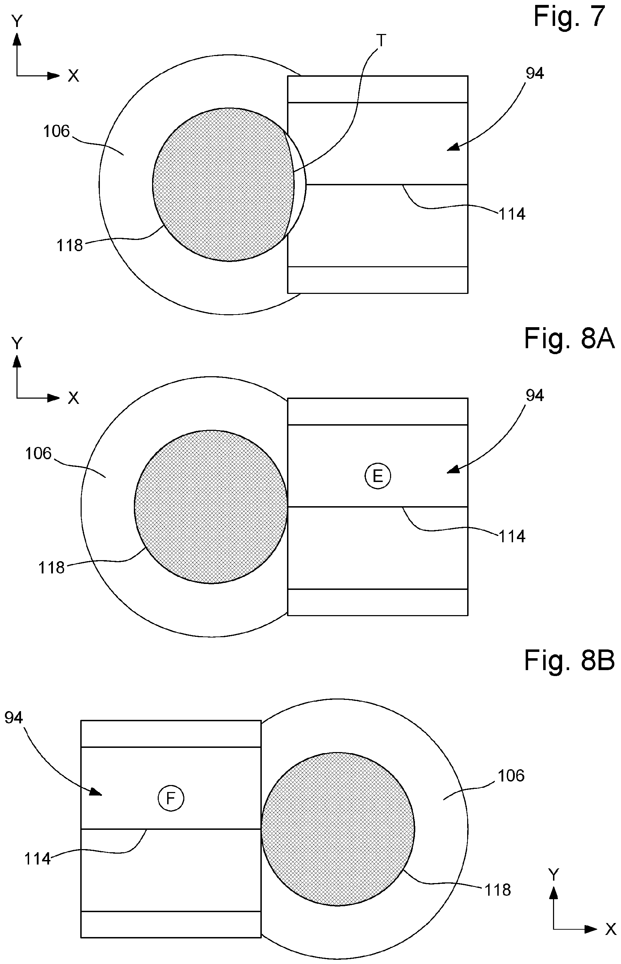

La roue inférieure 74 est chargée d'assurer la commande du mécanisme d'affichage des phases de lune 1. A cet effet, en pivotant, la roue inférieure 74 entraîne la crémaillère rectiligne 80 en translation et la repousse dans une première position extrême E illustrée à la figure 8A qui correspond au début d'un nouveau cycle lunaire. Par la suite, lorsque, après avoir chuté le long du décrochement 60 de la came 52 au début du cycle lunaire, le bec palpeur 66 recommence à suivre le profil 58 de la came 52, le bec palpeur 66 est progressivement repoussé en arrière dans le sens horaire vers une seconde position extrême F (voir figure 8B), de sorte que le troisième pignon 68, et donc la roue 70, tournent dans le sens antihoraire. Par conséquent, la roue inférieure 74 tourne dans le sens horaire et entraîne la crémaillère rectiligne 80 en translation de la droite vers la gauche du dessin depuis sa première position extrême E qui correspond au début d'un nouveau cycle lunaire jusqu'à sa seconde position extrême F illustrée à la figure 8B qui correspond à la fin du cycle lunaire. Une fois que le bec palpeur 66 aura parcouru toute la longueur du profil 58 de la came 52, il se retrouvera à nouveau au sommet du décrochement 60 de la came 52 et, au début d'un nouveau cycle lunaire, le bec palpeur 66 tombera le long du décrochement 60, ce qui provoquera le rappel de la crémaillère rectiligne 80 dans sa position initiale.

Le mécanisme d'affichage des phases de lune est complété par un dispositif qui permet de rattraper les jeux et de ramener ce mécanisme d'affichage des phases de lune à sa position extrême E à la fin d'un cycle lunaire. Ce dispositif se compose de la roue supérieure 78 en prise d'une part avec la denture de la crémaillère rectiligne 80, et d'autre part avec une roue intermédiaire 82 d'un mobile intermédiaire 84 qui comprend également un pignon intermédiaire 86. Ce pignon intermédiaire 86 engrène avec un secteur denté 88 d'un second râteau 90 qui est contraint élastiquement par la force de rappel d'un quatrième ressort 92. Grâce à cet agencement, on rattrape tous les jeux de la chaîne cinématique qui s'étend entre le premier râteau 62 et le second râteau 90, de sorte que le positionnement de la crémaillère rectiligne 80 est toujours précis.

Le mécanisme d'affichage des phases de lune 1 comprend la crémaillère rectiligne 80 avec laquelle un obturateur 94 est couplé de manière fixe en translation. Le mécanisme d'affichage des phases de lune 1 comprend également, du côté d'un observateur 96, un support transparent 98 muni d'une face supérieure 100 qui s'étend parallèlement à et à distance d'une face inférieure 102. Une représentation 104 de la Lune, par exemple sous la forme d'une décalque, est reportée sur la face supérieure 100 du support transparent 98. Cette représentation 104 de la Lune pourrait également être reportée sur la face inférieure 102 du support transparent 98. Un substrat 106 est, par rapport à l'observateur 96, disposé sous le support transparent 98, à distance de ce dernier. L'obturateur 94 est monté sur la crémaillère rectiligne 80 de façon à être capable de pénétrer progressivement dans l'espace qui sépare le support transparent 98 du substrat 106 lorsque la crémaillère rectiligne 80 est entraînée par la roue inférieure 74. L'obturateur 94 et le substrat 106 présentent des contrastes inversés : soit l'obturateur 94 est clair et le substrat 106 ainsi que la représentation 104 de la Lune sont sombres, soit l'obturateur 94 est sombre et le substrat 106 ainsi que la représentation 104 de la Lune sont claires. En supposant, à titre d'exemple seulement, que la représentation 104 de la Lune et le substrat 106 sont sombres et que l'obturateur 94 est clair et réfléchissant, on comprend que lorsque l'obturateur 94 ne se trouve pas dans l'espace situé entre le support transparent 98 et le substrat 106 sombre, la représentation 104 de la Lune se trouve au-dessus du substrat 106 sombre et n'est donc pas perceptible par l'observateur 96. Puis, au fur et à mesure que l'obturateur 94 clair et réfléchissant pénètre dans l'espace qui sépare le support transparent 98 du substrat 106 sombre, la représentation 104 de la Lune devient progressivement perceptible par l'utilisateur. Plus précisément, lorsque l'obturateur 94 commence à pénétrer dans l'espace entre le support transparent 98 et le substrat 106 sombre, l'observateur 96 voit progressivement apparaître le premier quartier de lune. Ensuite, lorsque l'obturateur 94 réfléchissant se trouve complètement entre le support transparent 98 et le substrat 106 sombre, l'observateur 96 voit la représentation 104 de la Lune au complet: c'est la pleine lune. Puis, l'obturateur 94 poursuit son mouvement rectiligne dans le même sens et commence à sortir de l'espace entre le support transparent 98 et le substrat 106 sombre, de sorte que l'observateur 96 voit apparaître progressivement le dernier quartier de lune, situation qui correspond au moment où l'obturateur 94 laisse la même surface libre que masquée. Enfin, lorsque l'obturateur 94 est complètement sorti de l'espace entre le support transparent 98 et le substrat 106 sombre, l'observateur 96 ne voit à nouveau plus la représentation 104 de la Lune (dans l'hypothèse où le substrat 106 est de la même couleur que la représentation 104 de la Lune) et sait donc que le cycle lunaire est terminé et qu'un nouveau cycle lunaire va commencer. Ainsi, l'observateur 96 dispose d'une représentation facilement intelligible des différentes phases de la Lune : nouvelle lune, premier quartier de lune, pleine lune, dernier quartier de lune puis à nouveau nouvelle lune.

Selon l'invention, le support transparent 98 se présente sous la forme d'une lentille 108 de forme plan-concave délimitée vers le haut, du côté de l'observateur 96, par une surface plane 110 qui reçoit la représentation 104 de la Lune, et délimitée vers le bas par une surface concave 112 à laquelle on donne un profil préférentiellement asphérique. On combine cette lentille plan-concave asphérique 108 avec un obturateur 94 plié en son centre pour lui donner un profil courbe, de préférence mais non impérativement hyperbolique. On obtient ainsi une image de la Lune dont le terminateur, c'est-à-dire la courbe qui sépare la partie sombre de la partie éclairée de la Lune, se rapproche au mieux de l'aspect réel de la Lune dans le ciel.

Pour déterminer les dimensions géométriques de la lentille plan-concave asphérique 108 et de l'obturateur 94 à profil hyperbolique, on utilise un logiciel de conception de systèmes optiques assistée par ordinateur tel que celui commercialisé sous la marque LightTools dont la version 8 qui a été publiée en 2019 a été utilisée pour les besoins de la présente invention.

Une fois définies les dimensions de la représentation 104 de la Lune que l'on veut pouvoir afficher au moyen du dispositif optique selon l'invention, les principaux paramètres sur lesquels il est possible d'agir pour obtenir une représentation réaliste des phases de la Lune sont :

-   le matériau dans lequel va être réalisée la lentille plan-concave asphérique 108 et donc l'indice de réfraction de cette dernière ;

-   le profil de la surface concave asphérique 112 de la lentille plan-concave asphérique 108 et donc sa constante de conicité ;

-   les dimensions de l'obturateur 94 ;

-   la distance qui sépare le sommet de la voûte formée par la surface concave asphérique 112 et l'obturateur 94 ;

-   le profil courbe, de préférence hyperbolique, de l'obturateur 94 et donc sa constante de conicité.

A titre d'exemple préféré seulement, la lentille plan-concave asphérique 108 est réalisée dans un matériau transparent dont l'indice de réfraction est préférentiellement compris entre 1.60 et 1.85, avec une valeur optimale au voisinage de 1.78. Cette valeur a été choisie après de nombreux essais qui ont permis de constater que, plus la valeur de l'indice de réfraction du matériau dans lequel est réalisée la lentille était élevée, plus il fallait approcher la lentille de l'obturateur 94 afin que ce dernier ne soit pas visible par l'observateur à travers cette lentille. On comprend aisément que ceci est favorable du point de vue de l'encombrement dans le cas où l'on souhaite intégrer un dispositif optique conforme à la présente invention dans une pièce d'horlogerie du type montre-bracelet. Par contre, plus l'indice de réfraction est élevé, plus le matériau correspondant est coûteux et difficile à usiner. En outre, on s'est rendu compte que lorsque la lentille devient trop proche de l'obturateur 94, on finit par voir l'image du bord périphérique de la lentille qui forme une couronne opaline à lactescente autour de la représentation 104 de la Lune, ce qui n'est pas acceptable. De même, on a constaté qu'en sélectionnant des valeurs d'indice de réfraction trop faibles, l'image de l'obturateur 94 à profil courbe et de préférence hyperbolique qui venait progressivement recouvrir la représentation de la Lune n'était pas très esthétique, ni vraiment réaliste par rapport à la vraie représentation de la Lune. C'est pourquoi une valeur de l'ordre de 1.60 à 1.85 et préférentiellement égale ou sensiblement égale à 1.78 pour l'indice de réfraction optique du matériau dans lequel est réalisée la lentille plan-concave asphérique 108 est apparue comme un optimum permettant de fournir le meilleur compromis entre indice de réfraction optique du matériau dans lequel est réalisée la lentille plan-concave asphérique 108 et distance séparant la surface concave asphérique 112 de la lentille plan-concave asphérique 108 et l'obturateur 94, et ainsi obtenir un mécanisme d'affichage de phases de lune dont l'encombrement soit compatible avec les dimensions de la pièce d'horlogerie dans laquelle ce mécanisme est destiné à être logé tout en procurant un terminateur dont le profil soit convenable. Un exemple de matériau qui convient bien pour les besoins de la présente invention est le verre produit et commercialisé par Schott sous la référence N-SF 11.

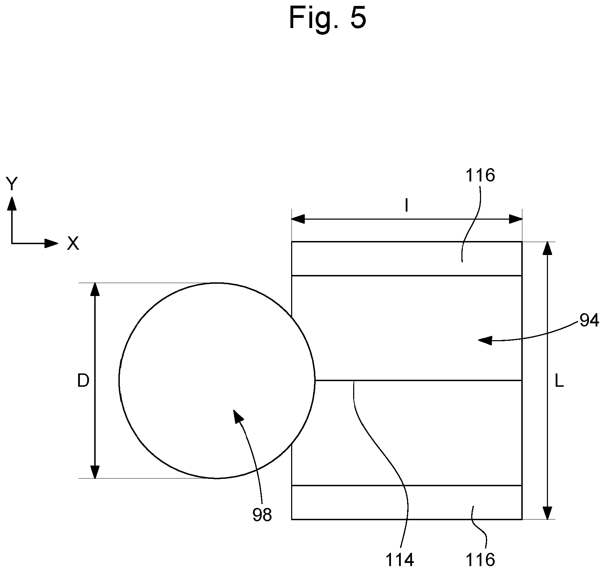

On introduit ensuite dans le logiciel de conception assistée par ordinateur les dimensions d'un bloc de matériau transparent ou tout au moins translucide tel qu'un cylindre en verre ou en polymère comme du polycarbonate à partir duquel la lentille plan-concave asphérique 108 est obtenue. Dans le cas présent, la lentille plan-concave asphérique 108 est obtenue par usinage d'un bloc de verre cylindrique dont le diamètre D est compris entre 6 mm et 7 mm et dont la hauteur H est comprise entre 0.9 mm et 1.1 mm (voir figure 5).

En ce qui concerne l'obturateur 94 à profil hyperbolique, celui-ci est obtenu à partir d'une tôle de forme rectangulaire dont l'épaisseur e est préférentiellement mais non limitativement comprise entre 0.08 mm et 0.2 mm, et dont la longueur l du côté qui s'étend parallèlement à la direction de déplacement de l'obturateur 94 est choisie comprise entre 7 mm et 8 mm, tandis que la largeur L du côté qui s'étend perpendiculairement à la direction de déplacement de cet obturateur 94 est choisie comprise entre 9 mm et 10 mm. Cette tôle est munie en son centre d'une pliure 114 qui s'étend selon une direction parallèle à la direction de déplacement de l'obturateur 94 et présente de préférence des bords plats 116 parallèlement à la pliure 114. On notera en effet qu'il n'est pas nécessaire que l'obturateur 94 conserve son profil hyperbolique jusqu'à ses extrémités car, dans ces zones, l'effet de distorsion optique est produit essentiellement par la lentille plan-concave asphérique 108. Ces bords plats 116 ont donc uniquement pour fonction d'obstruer complètement le champ de vision que procure la lentille plan-concave asphérique 108 et, en raison de leur planéité, ces bords 116 permettent de réduire l'encombrement du mécanisme d'affichage de phases de lune.

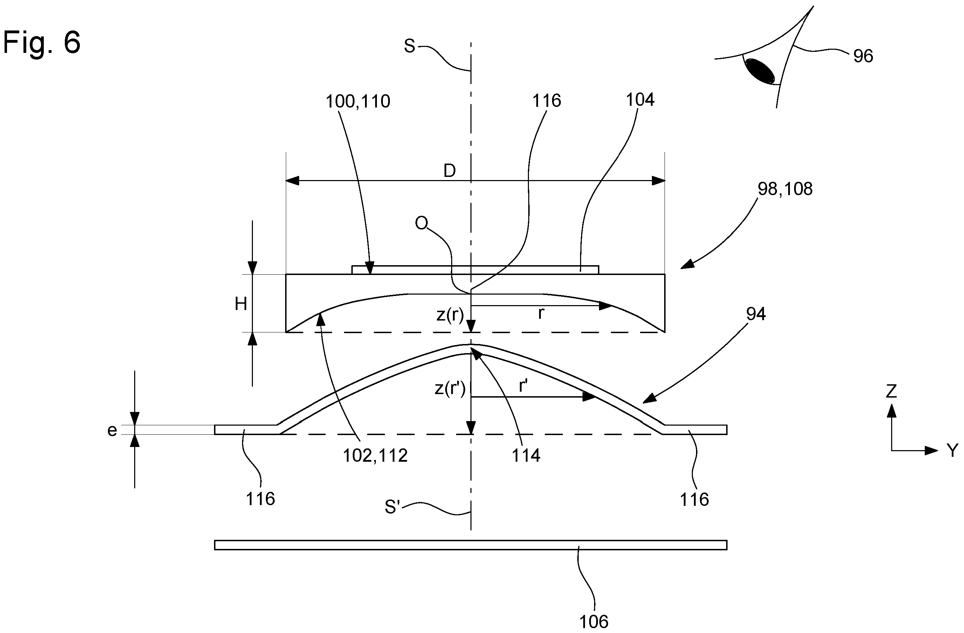

Le profil de la surface concave asphérique 112 de la lentille plan-concave asphérique 108 est déterminé par les valeurs des distances r et z(r). Si l'on appelle S l'axe central de symétrie de la lentille plan-concave asphérique 108, la distance r correspond à la distance qui sépare chaque point de l'axe central de symétrie S du point de la surface concave asphérique 112 qui se trouve en vis-à-vis (voir figure 6). De même, le profil hyperbolique de l'obturateur 94 est déterminé par la distance r' qui sépare chaque point du plan de symétrie S' de cet obturateur 94 de la surface de ce dernier. Ces distances r, r' sont déterminées au moyen de la même relation ci-dessous :

$$z(r) = \frac{\frac{r^2}{R}}{1 + \sqrt{1 - (1+k)\frac{r^2}{R^2}}} + \sum_{n=1}^{N} A_n \cdot r^n$$

où $k = -e^2$

Comme visible sur la figure 6, l'origine de la fonction z(r) correspond au point O qui se trouve au sommet de la voûte formée par la surface concave asphérique 112. La valeur de la fonction z(r) correspond, en chaque point de la voûte formée par la surface concave asphérique 112, à la hauteur de ce point considérée depuis la base de la lentille plan-concave asphérique 108.

Les valeurs des constantes R et k qui caractérisent la lentille plan-concave asphérique 108, de même que celles des constantes R' et k' qui caractérisent l'obturateur 94 vont être déterminées par itérations successives de la manière décrite ci-après. Quant aux coefficients $A_n$, il s'agit de coefficients d'une somme polynomiale dont les valeurs vont également être déterminées par itérations.

Pour ce qui est de la lentille plan-concave asphérique 108, la constante R correspond au rayon de courbure de la surface concave asphérique 112 au point O qui se trouve au sommet de la voûte formée par cette surface concave asphérique 112. Afin que le terminateur T qui est la ligne de démarcation entre la partie sombre et la partie éclairée de la Lune apparaisse rectiligne au milieu du cycle lunaire, il est nécessaire qu'au voisinage du point O la surface concave asphérique 112 soit pratiquement plane. A cet effet, on introduit initialement dans le logiciel de conception assistée par ordinateur une valeur du rayon de courbure R très grande, de l'ordre de plusieurs milliers de millimètres. Quant à la constante « k » qui est appelée « constante conique », il s'agit d'une quantité qui décrit les sections coniques. Par section conique, on entend une courbe plane définie par l'intersection d'un cône de révolution avec un plan. Lorsque le plan de coupe ne passe pas par le sommet du cône, son intersection avec ce cône correspond à l'une des courbes planes suivantes : ellipse, parabole ou hyperbole.

On note que $k = -e^2$ avec e qui correspond à l'excentricité de la section conique. L'excentricité d'une section conique est un nombre réel positif qui caractérise uniquement la forme de cette section conique ; on peut interpréter l'excentricité d'une section conique comme une mesure de la quantité dont une section conique s'écarte d'un cercle. Ainsi, l'excentricité d'un cercle est nulle. L'excentricité d'une ellipse qui n'est pas un cercle est comprise strictement entre zéro et un. L'excentricité d'une parabole est égale à 1 et l'excentricité d'une hyperbole est supérieure à 1.

La constante conique k intervient dans l'équation

$$y^2 - 2Rx + (k + 1)x^2 = 0$$

qui décrit une section conique dont l'apex est à l'origine et dont la tangente s'étend selon l'axe « y » et où R est le rayon de courbure pour x = 0. Cette formule est utilisée en optique géométrique pour décrire la surface optique d'une lentille. Dans le cas qui nous intéresse, on a initialement indiqué au logiciel de conception assistée par ordinateur que la constante de conicité était nulle (k = 0), autrement dit que l'on avait affaire à un cercle.

Par conséquent, pour ce qui est de la lentille plan-concave asphérique 108, on débute la simulation avec une valeur de la constante conique $k$ nulle et une valeur du rayon de courbure $R$ très grande.

Il en est de même en ce qui concerne l'obturateur 94 pour lequel on débute la simulation avec une valeur de la constante conique $k'$ nulle et une valeur du rayon de courbure $R'$ très grande. Il est important de noter que l'obturateur 94 peut être considéré comme l'objet dont l'image est perçue à travers la lentille plan-concave asphérique 108 et, qu'à ce titre, ses caractéristiques géométriques peuvent être déterminées par un logiciel de conception de systèmes optiques assistée par ordinateur tel que LightTools.

Enfin, on considère que la lentille plan-concave asphérique 108 est d'ordre pair, de sorte que l'on débute en choisissant arbitrairement des valeurs pour les coefficients $A_4$, $A_6$ et $A_8$. Dans le choix de départ des valeurs des coefficients $A_4$, $A_6$ et $A_8$, l'homme du métier est guidé par le fait qu'il sait que les valeurs de ces coefficients sont très faibles et qu'elles ne cessent de décroître au fur et à mesure que l'indice $n$ augmente. On décide d'ailleurs de s'arrêter au coefficient $A_8$ car la contribution des coefficients d'ordre supérieur sur l'amélioration de l'aspect résultant du terminateur $T$ est négligeable. En ce qui concerne le coefficient $A_2$, celui-ci est ignoré car le premier terme de l'expression z(r) contient déjà le carré de la variable $r$.

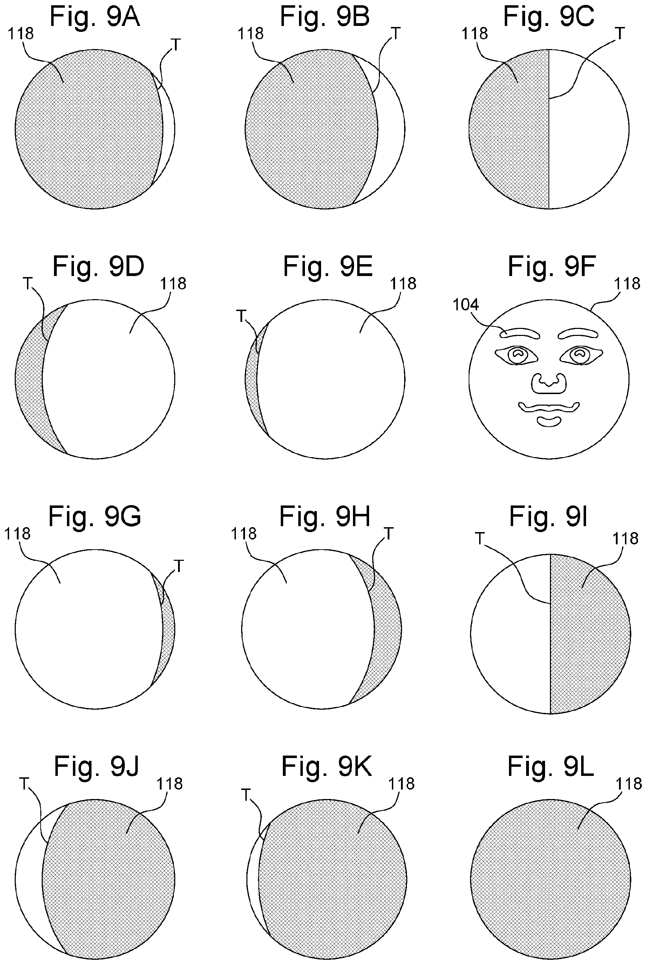

A l'aide du logiciel de conception assistée par ordinateur, on simule une représentation 118 de la Lune et de son terminateur $T$ pour plusieurs positions de l'obturateur 94 (voir figures 7 et 9A à 9L). A la figure 9A, on se trouve au début d'un cycle lunaire. A la figure 9C, la Lune se trouve dans son premier quartier. A la figure 9F, on se trouve au milieu du cycle lunaire et la Lune est pleine. La figure 9I correspond au dernier quartier de Lune et à la figure 9L on se trouve à la nouvelle Lune. Pour réaliser les simulations, on commence, par exemple, à faire varier les valeurs des paramètres $A_n$ ainsi que de la constante conique $k$ et du rayon de courbure $R$ qui caractérisent la lentille plan-concave asphérique 108, tandis que l'on maintient inchangées les valeurs des paramètres $A'_n$ ainsi que de la constante conique $k'$ et du rayon de courbure $R'$ qui caractérisent l'obturateur 94, et l'on observe à l'écran de l'ordinateur l'aspect résultant du terminateur $T$. On renouvelle l'expérience en gardant cette fois-ci constantes les valeurs des paramètres $A_n$, $k$ et $R$ qui caractérisent la lentille plan-concave asphérique 108, et en faisant varier les valeurs des paramètres $A'_n$ ainsi que de $k'$ et $R'$ qui caractérisent l'obturateur 94, et l'on observe à l'écran de l'ordinateur l'aspect résultant du terminateur $T$ au moyen de la fonction « Photorealistic Rendering » du logiciel LighTools. Cette fonction permet de visualiser la totalité du dispositif formé par la lentille plan-concave asphérique, l'obturateur hyperbolique et le substrat comme si ce dispositif était pris en photo aux angles et aux distances souhaités. Grâce à la fonction « Photorealistic Rendering », il est ainsi possible de vérifier que l'effet optique recherché est convenable. On procède ainsi de proche en proche jusqu'à ce que l'on obtienne un profil du terminateur $T$ que l'on considère fidèle à son aspect réel et dont on soit satisfait. Bien entendu, il s'agit là d'un critère purement subjectif qui est laissé à l'appréciation de chacun.

On notera que pour les caractéristiques dimensionnelles de la lentille plan-concave asphérique 108 et de l'obturateur 94 mentionnées ci-dessus, les résultats les plus satisfaisants quant à l'aspect visuel du terminateur $T$ ont été obtenus pour les valeurs $k = -1$ et $R = 20840$ mm et $A_4 = 3.769.10^{-3}$, $A_6 = 2.9534.10^{-5}$ et $A_8 = -1.407.10^{-7}$ en ce qui concerne la lentille plan-concave asphérique 108, et pour les valeurs $k' = -4.922$ et $R' = 2.556$ mm et $A_4 = 1.654.10^{-5}$, $A_6 = -1.511.10^{-6}$ et $A_8 = 4.686.10^{-8}$ en ce qui concerne l'obturateur 94. On observera que pour ce qui est de la valeur de la constante de conicité $k$, la valeur retenue pour la lentille plan-concave asphérique 108 est égale à -1, ce qui correspond à un profil parabolique. Quant à la valeur de la constante de conicité $k'$ qui caractérise le profil de l'obturateur 98, celle-ci est inférieure à -1, ce qui correspond à un profil hyperbolique.

Ainsi, le point $O$ qui est situé au sommet de la voûte formée par la surface concave asphérique 112 se trouve à une distance $P$ égale à 0.78 mm par rapport à la base du bloc de verre cylindrique. Par conséquent, on en déduit qu'en ce point $O$, l'épaisseur de la lentille plan-concave 108 asphérique est de 0.22 mm. C'est l'épaisseur minimale de la lentille plan-concave asphérique 108.

Il va de soi que la présente invention n'est pas limitée au mode de réalisation qui vient d'être décrit et que diverses modifications et variantes simples peuvent être envisagées par l'homme du métier sans sortir du cadre de l'invention tel que défini par les revendications annexées. On notera notamment que, dans le cas où l'obturateur est clair, celui-ci peut être recouvert d'une couche de matériau phosphorescent tel que celui commercialisé sous la marque déposée Super-LumiNova®. On notera également qu'afin d'éviter des phénomènes de reflets de la lumière, la surface de l'obturateur peut avantageusement présenter une rugosité. Toujours dans le même souci de limiter au maximum les réflexions de la lumière, la lentille plan-concave peut faire l'objet d'un traitement antireflets et ses bords peuvent être métallisés. Bien que non représenté au dessin, on notera qu'il peut être prévu de munir la came 52 de deux décrochements 60. Etant donné que l'étoile 24 fait un tour complet en deux cycles lunaires, il est alors possible de mettre l'étoile 24 en prise directe avec la came 52, et ainsi de faire l'économie des pignons 50 et 54 et du renvoi 56.

Nomenclature

1. Mécanisme d'affichage des phases de lune

2. Roue 24 heures

4. Doigt

6. Axe

8. Bague

10. Goupille

12. Trou oblong

14. Paroi intérieure

16. Première bascule

18. Axe de pivotement

20. Profil

22. Ressort supérieur

24. Etoile

26. Sautoir

28. Denture

30. Ressort inférieur

32. Pied

34. Sommet

36. Bec

38. Dispositif manuel de correction

40. Seconde bascule

42. Axe de pivotement

44. Moyen d'actionnement

46. Zone pliée

50. Premier pignon

52. Came

54. Second pignon

56. Renvoi

58. Profil

60. Décrochement

62. Premier râteau

64. Secteur denté

66. Bec palpeur

68. Troisième pignon

69. Mobile

70. Roue

72. Moyens d'entraînement

74. Roue inférieure

76. Axe de rotation

78. Roue supérieure

80. Crémaillère rectiligne

82. Roue intermédiaire

84. Mobile intermédiaire

86. Pignon intermédiaire

88. Secteur denté

90. Second râteau

92. Quatrième ressort

94. Obturateur

96. Observateur

98. Support transparent

100. Face supérieure

102. Face inférieure

104. Représentation de la Lune

106. Substrat

108. Lentille plan-concave asphérique

110. Surface plane

112. Surface concave asphérique

114. Pliure

116. Bords plats
118. Représentation de la Lune

**Revendications**

1. Dispositif optique pour pièce d'horlogerie comprenant un support transparent (98) muni d'une face supérieure (100) et d'une face inférieure (102) qui s'étend à distance de la face supérieure (100), ce support transparent (98) formant une lentille (108) de forme plan-concave délimitée d'un premier côté d'un observateur (96) par une surface plane (110), et délimitée d'un second côté opposé au premier côté, par une surface concave (112), le dispositif optique comprenant également un obturateur (94) présentant un profil courbe qui est, par rapport à l'observateur (96), disposé sous la surface concave (112) du support transparent (98), à distance de ce dernier, le dispositif optique comprenant enfin un substrat (106) disposé à la suite de l'obturateur (94), l'obturateur (94) étant agencé pour se déplacer entre le support transparent (98) et le substrat (106), l'obturateur (94) et le substrat (106) présentant des contrastes d'affichage inversés l'un par rapport à l'autre, le dispositif optique étant agencé pour projeter, à travers la lentille plan-concave (108), l'image d'un bord de l'obturateur (94) sur un objet disposé au-dessus de la surface plane de ladite lentille plan-concave (108).

2. Dispositif optique selon la revendication 1, **caractérisé en ce que** l'indice de réfraction optique du matériau dans lequel est réalisée la lentille plan-concave (108) est compris entre 1.60 et 1.85.

3. Dispositif optique selon la revendication 2, **caractérisé en ce que** l'indice de réfraction optique est égal ou sensiblement égal à 1.78.

4. Dispositif optique selon l'une des revendications 2 ou 3, **caractérisé en ce que** la lentille plan-concave (108) est réalisée en verre ou en polymère.

5. Dispositif optique selon l'une des revendications 1 à 4, **caractérisé en ce que** la surface concave (112) est courbe.

6. Dispositif optique selon la revendication 5, **caractérisé en ce que** la surface concave (112) présente un profil asphérique.

7. Dispositif optique selon l'une quelconque des revendications 1 à 6, **caractérisé en ce que** l'obturateur (94) présente un profil hyperbolique.

8. Dispositif optique selon l'une des revendications 1 à 7, **caractérisé en ce qu'**une représentation (104) de la Lune est reportée sur l'une des faces supérieure (100) ou inférieure (102) du support transparent (98), le dispositif optique comprenant également des moyens d'entraînement (72) qui, mus par un mouvement d'horlogerie, entraînent l'obturateur (94), l'obturateur (94) étant déplacé d'une position initiale à une position finale pendant une durée d'un cycle lunaire, de manière à révéler jour après jour à un observateur (96) l'aspect de la Lune qui passe de la nouvelle lune au premier quartier de lune, puis du premier quartier de lune à la pleine lune, puis au dernier quartier de lune et enfin à la nouvelle lune, l'obturateur (94) étant rappelé par les moyens d'entraînement de sa position finale à sa position initiale à la fin du cycle lunaire.

9. Dispositif optique selon la revendication 8, **caractérisé en ce que** les moyens d'entraînement (72) comprennent une crémaillère rectiligne (80) avec laquelle l'obturateur (94) est couplé de manière fixe en translation.

10. Dispositif optique selon la revendication 9, **caractérisé en ce que** les moyens d'entraînement (72) comprennent une roue inférieure (74) et une roue supérieure (78) sur un axe de rotation (76) de laquelle est montée libre en rotation la roue inférieure (74) qui engrène avec la crémaillère rectiligne (80).

11. Dispositif optique selon l'une des revendications 9 ou 10, **caractérisé en ce que** le mouvement d'horlogerie comprend un mobile de minuterie qui entraîne cinématiquement une came (52) qui effectue un tour complet sur elle-même en un nombre entier de fois un cycle lunaire, cette came (52) présentant un profil (58) suivi en permanence par un premier râteau (62), ce premier râteau (62) étant doté d'un secteur denté (64) par lequel il engrène avec les moyens d'entraînement (72).

12. Dispositif optique selon la revendication 11, **caractérisé en ce que** le premier râteau (62) est muni d'un bec palpeur

(66) par lequel il suit en permanence le profil (58) de la came (52), ce profil (58) étant conformé en colimaçon et étant doté d'au moins un décrochement (60) sensiblement rectiligne de façon que, peu de temps avant le début d'un nouveau cycle lunaire, le bec palpeur (66) se trouve au sommet du profil (58) de la came (52), puis tombe le long du décrochement (60), le premier râteau (62) entraînant au cours de ce mouvement par son secteur denté (64) un pignon (68) qui est relié cinématiquement aux moyens d'entraînement (72).

13. Dispositif optique selon l'une des revendications 11 ou 12, **caractérisé en ce qu'**il est complété par un dispositif de rattrapage de jeux qui se compose de la roue supérieure (78) en prise, d'une part avec la crémaillère rectiligne (80), et d'autre part avec une roue intermédiaire (82) d'un mobile intermédiaire (84) qui comprend également un pignon intermédiaire (86), ce pignon intermédiaire (86) engrenant avec un secteur denté (88) d'un second râteau (90) qui est contraint élastiquement par la force de rappel d'un quatrième ressort (92).

**Patentansprüche**

1. Optische Vorrichtung für einen Teil für die Uhrmacherei, die einen transparenten Träger (98) umfasst, der mit einer oberen Fläche (100) und einer unteren Fläche (102) versehen ist, die sich in einem Abstand von der oberen Fläche (100) erstreckt, wobei dieser transparente Träger (98) eine Linse (108) von flach-konkaver Form bildet, die auf einer ersten Seite eines Beobachters (96) durch eine ebene Fläche (110) begrenzt ist, und auf einer zweiten, der ersten Seite gegenüberliegenden Seite durch eine konkave Fläche (112) begrenzt ist, wobei die optische Vorrichtung außerdem eine Blende (94) mit einem gekrümmten Profil aufweist, die in Bezug auf den Beobachter (96) unter der konkaven Fläche (112) des transparenten Trägers (98) angeordnet ist, in einem Abstand davon angeordnet ist, wobei die optische Vorrichtung schließlich ein Substrat (106) umfasst, das hinter der Blende (94) angeordnet ist, wobei die Blende (94) so angeordnet ist, dass sie sich zwischen dem transparenten Träger (98) und dem Substrat (106) bewegt, wobei die Blende (94) und das Substrat (106) umgekehrte, einander entgegengesetzte Anzeigekontraste aufweisen, wobei die optische Vorrichtung so angeordnet ist, dass sie durch die Plankonkavlinse (108) das Bild einer Kante der Blende (94) mit dem Bild eines über der ebenen Oberfläche der Plankonkavlinse (108) angeordneten Objekts bildet.

2. Optische Vorrichtung nach Anspruch 1, **dadurch gekennzeichnet, dass** der optische Brechungsindex des Materials, aus dem die Plankonkavlinse (108) hergestellt ist, zwischen 1,60 und 1,85 liegt.

3. Optische Vorrichtung nach Anspruch 2, **dadurch gekennzeichnet, dass** der optische Brechungsindex gleich 1,78 ist.

4. Optische Vorrichtung nach einem der Ansprüche 2 und 3, **dadurch gekennzeichnet, dass** die Plankonkavlinse (108) aus Glas oder Polymer hergestellt ist.

5. Optische Vorrichtung nach einem der Ansprüche 1 bis 4, **dadurch gekennzeichnet, dass** die konkave Fläche (112) gekrümmt ist.

6. Optische Vorrichtung nach Anspruch 5, **dadurch gekennzeichnet, dass** die konkave Fläche (112) ein asphärisches Profil aufweist.

7. Optische Vorrichtung nach einem der Ansprüche 1 bis 6, **dadurch gekennzeichnet, dass** die Blende (94) ein hyperbolisches Profil aufweist.

8. Optische Vorrichtung nach einem der Ansprüche 1 bis 7, **dadurch gekennzeichnet, dass** eine Darstellung (104) des Mondes auf eine obere Fläche (100) oder untere Fläche (102) des transparenten Trägers (98) übertragen wird, wobei die optische Vorrichtung außerdem Antriebsmittel (72) umfasst, die durch ein Uhrwerk bewegt werden und die Blende (94) antreiben, wobei die Blende (94) für die Dauer eines Mondzyklus von einer Ausgangsposition in eine Endposition verlagert wird, um einem Beobachter (96) Tag für Tag das Aussehen des Mondes zu enthüllen, das sich vom Neumond zum ersten Viertelmond, dann vom ersten Viertelmond zum Vollmond, dann zum letzten Viertelmond und schließlich zum Neumond ändert, wobei die Blende (94) am Ende des Mondzyklus durch die Antriebsmittel aus seiner Endstellung in seine Ausgangsstellung zurückgeführt wird.

9. Optische Vorrichtung nach Anspruch 8, **dadurch gekennzeichnet, dass** die Antriebsmittel (72) eine geradlinige Zahnstange (80) umfassen, mit der die Blende (94) translatorisch fest verbunden ist.

**10.** Optische Vorrichtung nach Anspruch 10, **dadurch gekennzeichnet, dass** die Antriebsmittel (72) ein unteres Rad (74) und ein oberes Rad (78) auf einer Drehachse (76) umfassen, von denen das untere Rad (74), das mit der geradlinigen Zahnstange (80) in Eingriff steht, frei drehbar gelagert ist.

**11.** Optische Vorrichtung nach einem der Ansprüche 9 oder 10, **dadurch gekennzeichnet, dass** das Uhrwerk ein Zeigerwerkdrehteil umfasst, das kinematisch eine Kurvenscheibe (52) antreibt, die eine vollständige Umdrehung um sich selbst in einer ganzzahligen Anzahl von Malen pro Mondzyklus ausführt, wobei diese Kurvenscheibe (52) ein Profil (58) aufweist, dem einen ersten Rechen (62) ständig folgt, wobei dieser erste Rechen (62) mit einem gezahnten Sektor (64) versehen ist, durch den er mit den Antriebsmitteln (72) in Eingriff steht.

**12.** Optische Vorrichtung nach Anspruch 11, **dadurch gekennzeichnet, dass** der erste Rechen (62) mit einem Tasterschnabel (66) versehen ist, mit dem sie permanent dem Profil (58) der Kurvenscheibe (52) folgt, wobei dieses Profil (58) die Form einer Schnecke aufweist und mit mindestens einer im Wesentlichen geradlinigen Stufe (60) versehen ist, so dass, kurz vor dem Beginn eines neuen Mondzyklus sich der Tasterschnabel (66) an der Spitze des Profils (58) der Kurvenscheibe (52) befindet und dann entlang der Stufe (60) fällt, wobei der erste Rechen (62) während dieser Bewegung durch seinen gezahnten Sektor (64) einen Trieb (68) antreibt, der kinematisch mit den Antriebsmitteln (72) verbunden ist.

**13.** Optische Vorrichtung nach einem der Ansprüche 11 oder 12, **dadurch gekennzeichnet, dass** sie durch eine Vorrichtung zum Aufnehmen des Spiels ergänzt wird, die aus dem oberen Rad (78) besteht, das einerseits mit dem geradlinigen Rechen (80) und andererseits mit einem Zwischenrad (82) eines beweglichen Zwischenstücks (84) in Eingriff steht, das ebenfalls einen Zwischentrieb (86) umfasst, wobei dieser Zwischentrieb (86) in einen gezahnten Sektor (88) eines zweiten Rechens (90) eingreift, die durch die Rückstellkraft einer vierten Feder (92) elastisch eingespannt ist.

**Claims**

**1.** Optical device for a timepiece comprising a transparent support (98) provided with an upper face (100) and a lower face (102) which extends at a distance from the upper face (100), this transparent support (98) forming a lens (108) of plano-concave shape delimited on a first side of an observer (96) by a planar surface (110), and delimited on a second side, opposite the first side, by a concave surface (112), the optical device also comprising a shutter (94) having a curved profile which is, with respect to the observer (96), disposed under the concave surface (112) of the transparent support (98), at a distance therefrom, the optical device finally comprising a substrate (106) disposed after the shutter (94), the shutter (94) being arranged to displace between the transparent support (98) and the substrate (106), the shutter (94) and the substrate (106) having inverted opposed display contrasts relative to each other, the optical device being arranged to form, through the plano-concave lens (108), the image of an edge of the shutter (94) with the image of an object disposed above the planar surface of said plano-concave lens (108).

**2.** The optical device according to claim 1, **characterised in that** the optical refractive index of the material from which the plano-concave lens (108) is made is comprised between 1.60 and 1.85.

**3.** The optical device according to claim 2, **characterised in that** the optical refractive index is equal to 1.78.

**4.** The optical device according to one of claims 2 and 3, **characterised in that** the plano-concave lens (108) is made of glass or polymer.

**5.** The optical device according to one of claims 1 to 4, **characterised in that** the concave surface (112) is curved.

**6.** The optical device according to claim 5, **characterised in that** the concave surface (112) has an aspherical profile.

**7.** The optical device according to any of claims 1 to 6, **characterised in that** the shutter (94) has a hyperbolic profile.

**8.** The optical device according to one of claims 1 to 7, **characterised in that** a representation (104) of the Moon is transferred to one of the upper (100) or lower (102) faces of the transparent support (98), the optical device also comprising drive means (72) which, intended to be moved by a horological movement, drive the shutter (94), the shutter (94) being displaced from an initial position to a final position for a duration of a lunar cycle, so as to reveal day after day to an observer (96) the aspect of the Moon which changes from the new moon to the first quarter moon, then from the first quarter moon to the full moon, then to the last quarter moon and finally to the new moon, the shutter (94) being returned by the drive means from its final position to its initial position at the end of the lunar cycle.

9. The optical device according to claim 8, **characterised in that** the drive means (72) comprise a rectilinear rack (80) with which the shutter (94) is fixedly coupled in translation.

10. The optical device according to claim 10, **characterised in that** the drive means (72) comprises a lower wheel (74) and an upper wheel (76) on a rotation axis (76) of which lower wheel (74) is mounted free in rotation, this lower wheel (74) meshing with the rectilinear rack (80).

11. The optical device according to one of claims 9 or 10, **characterised in that** the horological movement comprises a motion-work mobile which kinematically drives a cam (52) which performs a complete revolution on itself in an integer number of times a lunar cycle, this cam (52) having a profile (58) that is permanently followed by a first rack (62), this first rack (62) being provided with a toothed sector (64) by which it meshes with the drive means (72).

12. The optical device according to claim 11, **characterised in that** the first rack (62) is provided with a feeler beak (66) by which it permanently follows the cam (52) profile (58), this profile (58) being shaped as a snail and being provided with at least one substantially rectilinear step (60) so that, shortly before the start of a new lunar cycle, the feeler beak (66) is at the top of the cam (52) profile (58), then falls along the step (60), the first rack (62) driving during this movement by its toothed sector (64) a pinion (68) which is kinematically connected to the drive means (72).

13. The optical device according to any of claim 11 or 12, **characterised in that** it comprises a clearance take-up device consisting of the upper wheel (78) engaged, on the one hand, with the rectilinear rack (80), and on the other hand, with an intermediate wheel (82) of an intermediate mobile (84) which also comprises an intermediate pinion (86), this intermediate pinion (86) meshing with a toothed sector (88) of a second rack (90) which is elastically constrained by the return force of a fourth spring (92).

Fig. 1

# Fig. 2

## Fig. 3A

## Fig. 3B

## Fig. 4A

## Fig. 4B

# Fig. 5

# Fig. 6

Fig. 7

Fig. 8A

Fig. 8B

Fig. 9A

Fig. 9B

Fig. 9C

Fig. 9D

Fig. 9E

Fig. 9F

Fig. 9G

Fig. 9H

Fig. 9I

Fig. 9J

Fig. 9K

Fig. 9L

**EP 3 842 874 B1**

## RÉFÉRENCES CITÉES DANS LA DESCRIPTION

**Documents brevets cités dans la description**

- FR 3064376